# EUROPEAN PATENT SPECIFICATION

(11) **EP 0 555 977 B1**
(45) Date of publication and mention of the grant of the patent: **03.01.1996**
(21) Application number: 93300734.6
(22) Date of filing: 02.02.1993
(51) Int. Cl.: B60J 7/043

(54) **Opening roof for a vehicle**
Fahrzeug-Sonnendach
Toit ouvrant pour véhicule

(30) Priority: 12.02.1992 GB 9202893
(43) Date of publication of application: 18.08.1993
(73) Proprietor: Britax Weathershields Limited, Warwick CV34 6DE (GB)
(72) Inventor: Scott, Paul Geoffrey, Shirley, Solihull, West Midlands B90 1NR (GB)
(74) Representative: Hollinghurst, Antony

(56) References cited:
- DE-A- 3 227 800
- DE-A- 4 006 160
- DE-C- 3 735 686

## Description

This invention relates to an opening roof assembly for a vehicle, comprising stationary guide means provided on a side of an opening in a fixed vehicle roof and extending in the longitudinal direction of the vehicle, a slide being slidably guided in the stationary guide means and being adapted to be driven by drive means, a front pivot lift arm supporting front pivot means on its front end and coupled to the slide by height adjusting means, a panel closing the opening in the fixed roof in a closed position and being capable of being firstly pivoted about said front pivot means adjacent its front edge from its closed position to a position in which its rear edge is raised above the fixed vehicle roof and then being slidably movable rearwardly into positions above the fixed roof, and a lift link having its upper end pivotally connected to the panel at a location behind said front pivot means and its lower end pivotally coupled to a slot in the slide.

EP-A-0296644 discloses an opening roof assembly of this type consisting of a large number of parts. It is an object of the present invention to provide a simpler mechanism.

According to the invention, in an opening roof assembly of the type described above, the lower end of the lift link carries a lift link pivot pin which engages in said slot in the slide and movement of the lift link pivot pin in said slot is controlled by cam surfaces on the front pivot lift arm.

Two embodiments of the invention will now be described, by way of example, with reference to the accompanying drawings, in which:
Figure 1 is a perspective view of the top of a motor car fitted with an opening roof of the type to which the invention relates;
Figure 2 is a perspective view of part of the mechanism for an opening roof in accordance with the invention suitable for mounting on one side of the roof opening illustrated in Figure 1;
Figure 3 is a side view of a slide shoe forming part of the mechanism shown in Figure 2;
Figure 4 is a side view of a pivot lift arm forming part of the mechanism shown in Figure 2;
Figure 5 is a side view of a lift link forming part of the mechanism shown in Figure 2;
Figure 6 is a side view of the mechanism shown in Figure 2 with the panel in the fully closed position;
Figure 7 is a side view, similar to Figure 6, but with the mechanism in an unlocked position in which opening movement is about to commence;
Figure 8 is a side view, similar to Figure 7, but with the rear edge of the panel slightly raised above the vehicle roof;
Figure 9 is a side view, similar to Figure 8, with the rear edge of the panel in its fully raised position;
Figure 10 is a side view, similar to Figure 9, but with the mechanism in a position in which the panel is free to slide rearwardly;
Figure 11 is a side view, similar to Figure 10, but with the panel slid rearwardly and its rear half broken away; and
Figures 12 to 21 are views similar to Figures 2 to 11 respectively of a second embodiment of the invention.

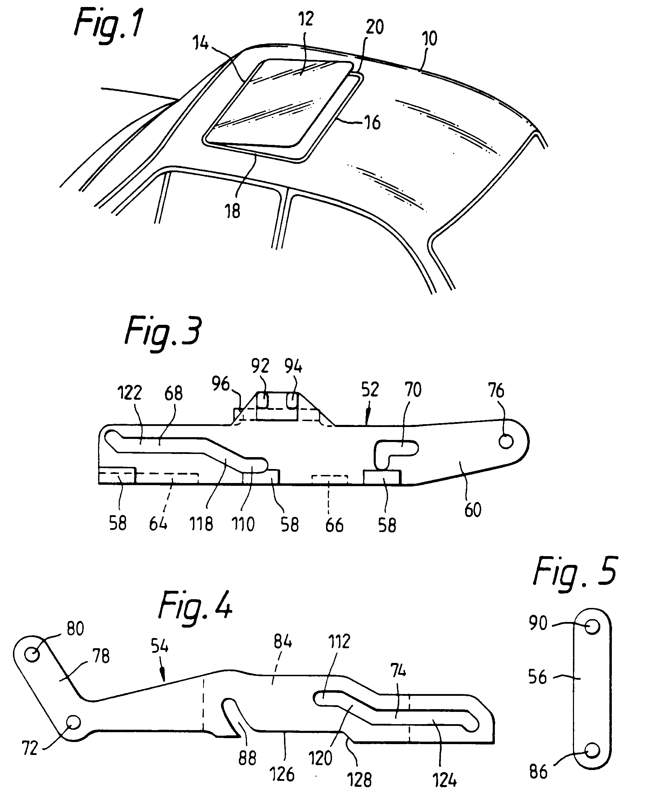

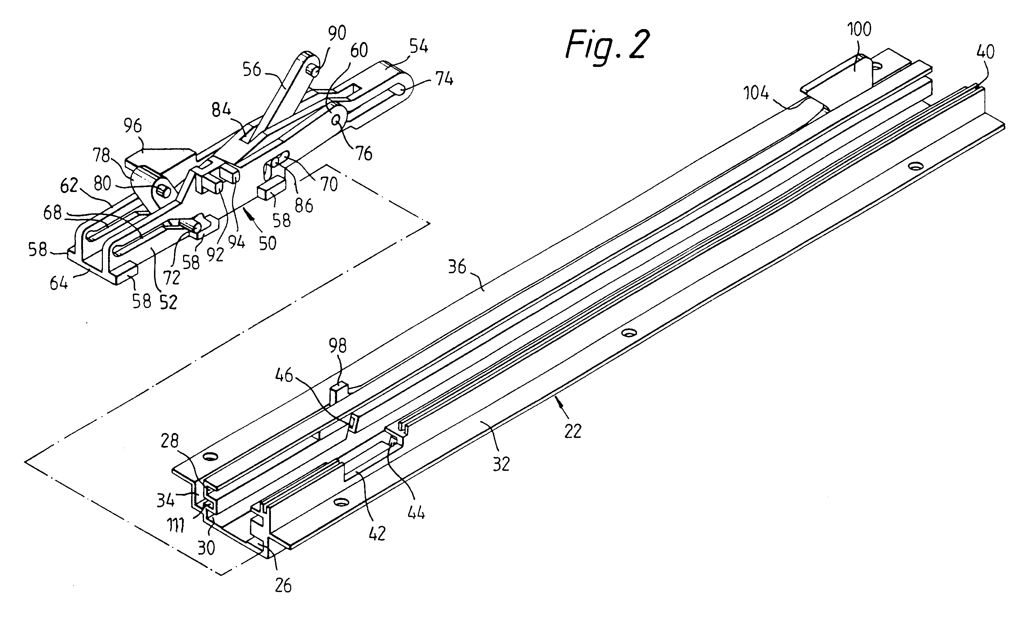

Figure 1 shows the roof 10 of a motor car containing an opening which can be closed by a panel 12 and which is surrounded by a frame comprising a front member 14, a back member 16 and side members 18 and 20. When closed, the panel 12 is pressed against seals (not shown) on the four frame members 14 to 20.

Figure 2 shows a guide track 22 which is secured to the underside of the side member 18 of the frame. A similar guide track (not shown) is secured to the underside of the other side member 20. As can be seen from Figure 2, the guide track 22 comprises a channel open on its upper side and having inwardly facing upper and lower grooves 24 and 26 in its outer side walls and similar upper and lower grooves 28 and 30 in its inner side walls, the terms "inner" and "outer" being with reference to the centre line of the vehicle. The outer side wall also carries an outwardly directed flange 32 which is secured to the underside of the rail 18 of the frame. The inner side wall carries an auxiliary guide channel 34 with a flange 36 which is secured to the underside of the front and rear transverse rails 14 and 16. A second smaller auxiliary groove 40 is formed in the upper edge of the outer side wall and serves as a guide for one edge of a plastics drive tape (not shown) having a row of rectangular slots formed along its length which can be engaged by the teeth of a drive sprocket (as described in EP-A-0106610). The outer side wall has a cut-out 42 adjacent to its front end which serves to receive an arcuate guide (not shown) for guiding the drive tape through a 90° turn into a guide track (not shown) extending across the front edge of the roof opening below the front member 14 (Figure 1). In the region of the cut-out 42, there are inclined slots 44 and 46 in the side walls of the guide track 22 extending between the upper and lower grooves 24 and 26 and between the upper and lower grooves 28 and 30 respectively.

Figure 2 also shows a slide shoe assembly 50 consisting of a slide shoe 52, a pivot lift arm 54 and a lift link 56. As can be seen from Figures 2 and 3, the slide shoe 52 has laterally projecting lugs 58 on its inner and outer sides which engage in the bottom grooves 26 and 30 in the track 22. The slide shoe 52 consists of two side walls 60 and 62 interconnected at their bottom edges by two linking webs 64 and 66. The two side walls contain identical longitudinally extending front slots 68 and rear slots 70.

The pivot lift arm 54 carries a pin 72 near its front end which is received in the slots 68 in the slide shoe 52, and has a slot 74 near its rear end which is of identical shape, but inverted relative to the slots 68 in the slide shoe 52 and which receives a second pin 76 which extends between the rear ends of the side walls 60 and 62. The effect of this is that movement of the slide shoe 52 relative to the pivot lift arm 54 longitudinally of the track 22, causes vertical linear movement of the pivot lift arm 54 but no angular movement thereof.

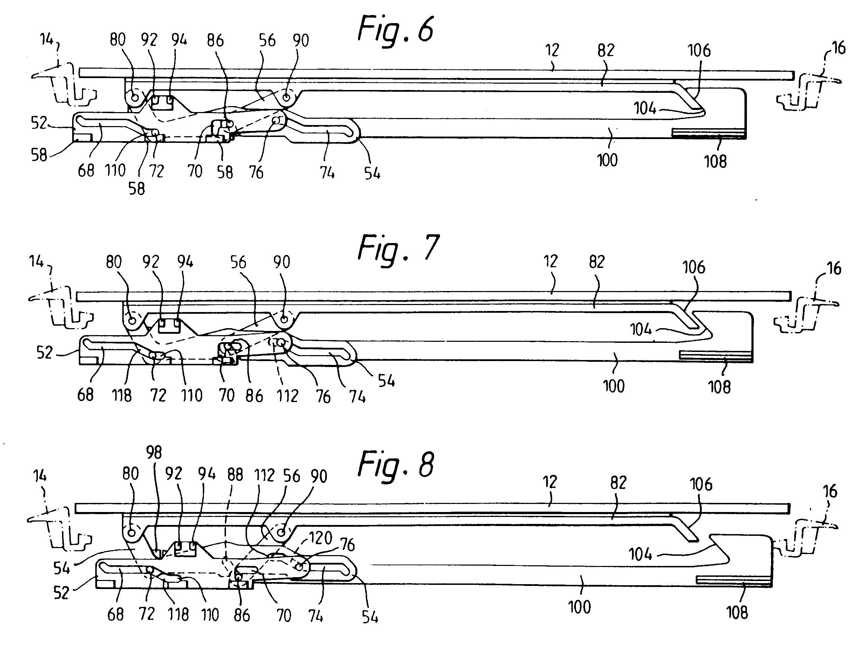

The pivot lift arm 54 has an upwardly extending portion 78 at its front end which carries a pivot pin 80 for engagement with a support member 82 (see Figure 6) to which the panel 12 is secured. The pivot lift arm 54 also has a vertically extending slot 84 through which the lift link 56 projects. At its lower end, the lift link 56 carries a pivot pin 86 (see Figure 5) which is received in L-shaped slots 70 in the side walls 60 and 62 of the slide shoe and slots 88 in the sides of the pivot lift arm 54 bounding the slot 84. At its upper end, the lift link 56 carries a second pivot pin 90 which engages with the support member 82 (Figure 6).

The slide shoe 52 has two spaced projections which extend outwardly from the side wall 60 over the auxiliary groove 40 in the track for engagement into adjacent slots in the above mentioned flexible plastics drive tape. The other side wall 62 carries a projection 96 which extends over the auxiliary guide channel 34 so that the front edge of the projection 96 can engage with a vertical projection 98 on a slide bar 100 which is slidably located in the auxiliary guide channel 34 and biased by a spring (not shown) in the rearward direction, i.e., to the right as viewed in Figure 6.

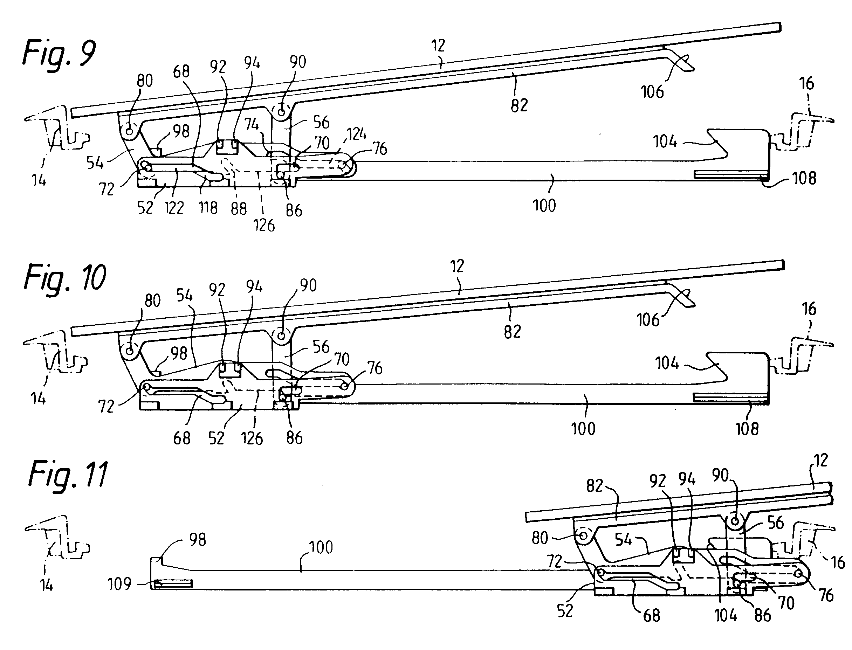

The slide bar 100 has a second projection at its rear end with an inclined cam surface 104 positioned to engage with a complementary cam surface 106 on the rear end of the support member 82 so as to hold the rear edge of the panel 12 firmly in engagement with the seal (not shown) on the back frame member 16 when the panel 12 is in its closed position. The slide bar 100 also has a laterally projecting lug 108 (see Figure 6) near its rear end, and a corresponding lug 109 (see Figure 11) near its front end, which engage in a groove 111 (Figure 2) in one at the side walls of the auxiliary guide channel 34.

Figure 6 shows the panel 12 in its fully closed position. When the panel 12 is to be opened, the drive tape (not shown) moves the slide shoe 52 rearwardly along the track 22, initially to the position shown in the Figure 7. Rearward displacement of the pivot lift arm 54 is prevented by engagement of the projecting ends of the pivot pin 72 in inclined slots 44 and 46 in the side walls of the guide track 22. Consequently, the slot 68 in the slide shoe 54 moves so that the pin 72 on the pivot link arm 54 is brought to the left hand end at a short horizontal section 110 which forms the right hand extremity of the slot 68, and the pin 76 in the slide shoe 52 travels along a corresponding horizontal section 112 at the left hand extremity of the slot 74 in the pivot lift arm 54, which remains stationary during this movement. The panel 12 remains stationary, with the result that the lift link 56 is displaced along the horizontal part of the L-shaped slot 70 in the slide shoe 52. At the same time, the slide bar 100 is allowed by the projection 96 on the slide shoe 52 to move to the right under the action of its above-mentioned spring (not shown), so as to disengage the cam surface 104 thereon from the cam surface 106 on the support amber 82.

During the next phase of the opening movement, the mechanism moves from the position shown in Figure 7 to the position shown in Figure 8, the pin 72 moving along an inclined part 118 of the slot 68 and the pin 76 moving along a correspondingly inclined part 120 of the slot 74, thus raising the pivot lift arm 54. This raises the pivot pin 80 supporting the front end of the support member 82 to which the panel 12 is attached, thus raising the front edge of the panel 12 clear of the seal (not shown) on the front member 14 of the frame. At the same time, the open-ended slot 88 in the pivot lift arm 54 causes the pivot pin 86 at the bottom of the lift link 56 to continue to move along the horizontal part of the L-shaped slot 70, thus keeping the panel 12 parallel to the car roof 10 until its front edge is clear of the above-mentioned seal. When the pivot pin 86 reaches the front end of the horizontal part of the L-shaped slot 70, it is allowed by the open-ended slot 88 to travel to the bottom of the vertical section of the L-shaped slot 70. The lift link 56 then starts to pivot in a counter-clockwise direction about the pivot pin 86. When the mechanism has reached the position shown in Figure 8, the pivot lift arm 54 has been raised to such an extent that the pivot pin 86 is clear of the bottom of the openended slot 88. The slide bar 100 has moved into abutment with the back frame member 16.

As the mechanism continues to move from the position shown in Figure 8 to the position shown in Figure 9, the lift link 56 continues its anti-clockwise movement to a substantially vertical position. At the same time, the pivot pin 72 travels along a second horizontal portion 122 of the slot 68 while the pivot pin 76 travels along a similar horizontal portion 124 of the slot 74. The pivot pin 86 at the bottom of the lift link 56 is retained at the bottom end of the vertical part of the L-shaped slot 70 by a cam surface 126 on the bottom face of the pivot lift arm 54. The rear edge of the panel 12 is now in its fully raised position but is prevented by sliding rearwardly over the roof of the vehicle 10 behind the roof opening by continued engagement of the ends of the pivot pin 72 in the inclined slots 44 and 46 in the track 22 (Figure 2).

Continued rearward movement of the slide shoe 52 causes the pivot pin 72 to move along a short inclined section at the front end of the slot 68 and the pivot pin 76 to move along a corresponding inclined section at the rear end of the slot 74, thereby raising the pivot lift arm 54 sufficiently to disengage the ends of the pivot pin 72 from the slots 44 and 46 in the track 22. The cam surface 126 on the bottom of the pivot lift arm 54 has an inclined portion 128 which ensures that the pivot pin 86 continues to be held at the bottom of the vertical part of the L-shaped slot 70. The slide shoe 52 is now free to slide along the full length of the track 22, moving the panel 12 to its fully open position as illustrated in Figure 11. The panel 12 is retained in its raised position by engagement of the ends of the pivot pin 72 in the slots 24 and 28.

When the panel 12 is to be closed, the shoe 52 is slid forwardly to bring the ends of the pivot pin 72 into alignment with the slots 44 and 46, permitting the panel 12 to be lowered. The above described sequence of movements is then reversed, the front edge of the open-ended slot 88 lifting the pivot pin 86 as the mechanism moves from the position shown in Figure 8 to the position shown in Figure 7.

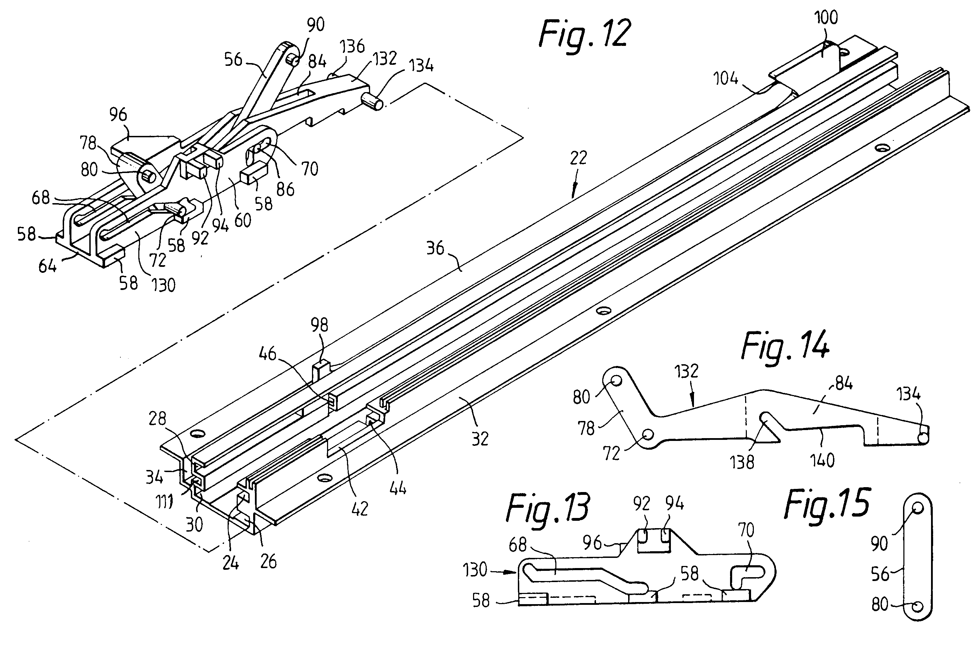

Figures 12-21 illustrate a modified embodiment of the invention for use with the same track 22 as illustrated in Figure 2 and using an identical lift link 56. This embodiment has a guide shoe 130 (see Figure 13) which is identical with the guide shoe 52 except that it does not have a pivot pin 76 at its rear end and is, therefore, somewhat shorter. Its remaining parts are identical with the corresponding parts of the slide shoe 52 and are denoted with the same reference numerals.

The embodiment illustrated in Figures 12-21 also has a pivot lift arm 132 (Figure 14), the front part 78 of which carries pivot pins 72 and 80, similar to the correspondingly numbered parts of the pivot lift arm 54 shown in Figure 4. The pivot lift arm 132 also has a vertically extending slot 84 for the lift link 56 but, in place of the slot 74 of Figure 4, it has two integral pivot formations 134 and 136 which engage in the lower groove 26 and 30 of the track 22.

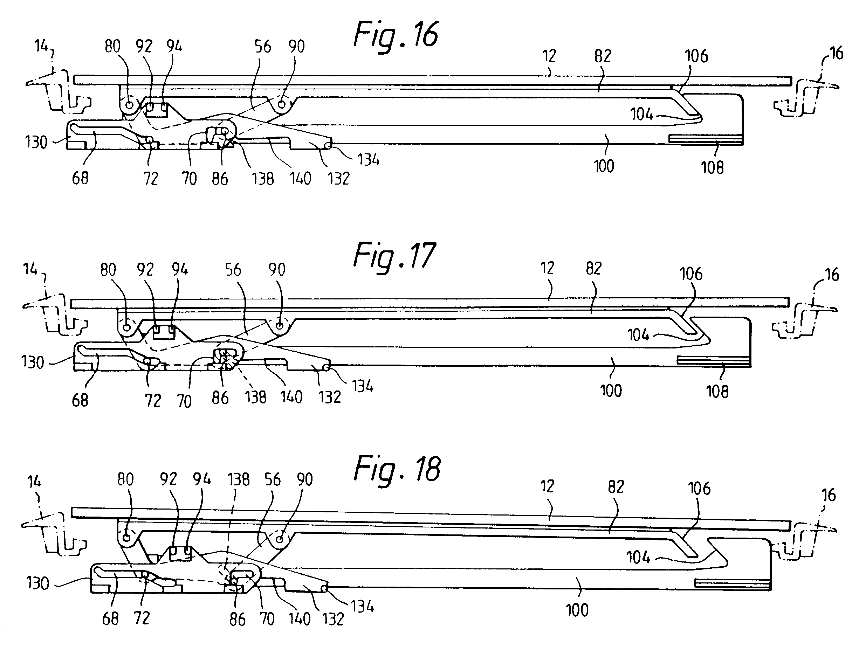

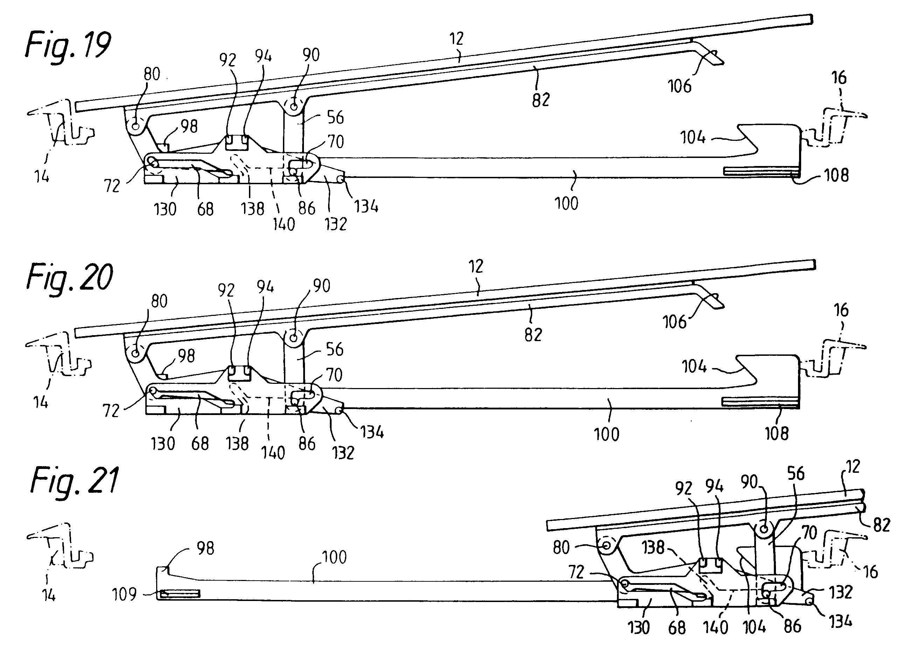

In the course of operation, as the mechanism moves from the position shown in Figure 16 to the position shown in Figure 21, the pivot lift arm 132 pivots about the formations 134 and 136 instead of remaining parallel to the track 122 and consequently the open-ended slot 88 of Figure 4 is replaced by a straight slot 138 as shown in Figure 14. In addition, the cam surface 140 for holding down the pivot pin 80 at the bottom of the L-shaped slot 70 is of a different shape to the corresponding surfaces 126 and 128 of Figure 4. Otherwise, the manner of operation is the same as that described with reference to Figures 6-11 and will not be described in detail.

## Claims

1. An opening roof assembly for a vehicle, comprising stationary guide means (22) provided on a side of an opening in a fixed vehicle roof (10) and extending in the longitudinal direction of the vehicle, a slide (52) being slidably guided in the stationary guide means (22) and being adapted to be driven by drive means, a front pivot lift arm (54, 132) supporting front pivot means (80) on its front end and coupled to the slide (52) by height adjusting means (68, 72), a panel (12) closing the opening in the fixed roof (10) in a closed position and being capable of being firstly pivoted about said front pivot means (80) adjacent its front edge from its closed position to a position in which its rear edge is raised above the fixed vehicle roof (10) and then being slidably movable rearwardly into positions above the fixed roof (10), and a lift link (56) having its upper end pivotally connected to the panel (12) at a location (90) behind said front pivot means (80) and its lower end pivotally coupled to a slot (70) in the slide (52), characterised in that the lower end of the lift link (56) carries a lift link pivot pin (86) which engages in said slot (70) in the slide (52), movement of the lift link pivot pin (86) in said slot (70) is controlled by cam surfaces (88, 138) on the front pivot lift arm (54, 132).

2. An opening roof assembly according to claim 1, wherein the lift link pivot pin (86) directly engages in said slot (70) in the slide (52).

3. An opening roof assembly according to claim 1 or 2, wherein the slot (70) is L-shaped, having a substantially horizontal part and a substantially vertical part, and the cam surfaces include an open-ended slot (88, 138) inclined at respective acute angles to both the horizontal part and the vertical part of the L-shaped slot (70) so that horizontal movement of the slide (52) relative to the front pivot lift arm (54, 132) causes movement of the lift link pivot pin (86) away from an end of the horizontal part of the slot (70) during an initial phase of movement from the closed position.

4. An opening roof assembly according to claim 1, 2 or 3, wherein the cam surfaces include an edge (126, 140) arranged to retain the lift link pivot pin (86) at an end of the vertical part of the slot (70) during a subsequent phase of movement.

5. An opening roof assembly according to any preceding claim, wherein the height adjusting means comprises a front lift pivot pin (72) fast with the front pivot lift arm (54, 132) and engaging in an inclined slot (68) in the slide (52) so arranged that rearward movement of the slide (52) relative to the front pivot lift arm (54, 132) causes upward movement of the front pivot means (80), a projection (72) on the front pivot lift arm (54, 132) engaging with a slot (44, 46) in the stationary guide means (22) so as to restrict horizontal movement of the front pivot lift arm (54, 132) when the front lift pivot pin (72) is displaced from the upper end of the inclined slot (68) and to restrict downward movement of the front pivot means (80) when the front pivot lift arm (54, 132) is displaced from its foremost position in the stationary guide means (22).

6. An opening roof assembly according to claim 5, wherein said projection on the front pivot lift arm (54, 132) comprises a projecting end of the front lift pivot pin (72).

7. An opening roof assembly according to claim 5 or 6, wherein a slide bar (100) is slidably located in the stationary guide means (22) so that an upwardly projecting rearwardly facing latch formation (104) thereon is movable into and out of engagement with a downwardly projecting forwardly facing latch formation (106) secured adjacent to the rear edge of the panel (12), and releasable coupling means (96, 98) are arranged to connect the slide bar (100) for simultaneous movement with the slide (52) as the front lift pivot pin (72) moves along a first section (110) of the inclined slot (68).

8. An opening roof assembly according to any preceding claim, wherein a second front lift pivot pin (76) in the rear end of the slide (52) engages in a slot (74) in the rear end of the front pivot lift arm (54), the slot (74) being of the same shape and dimensions as the inclined slot (68) in the slide (52) and inverted with respect thereto.

9. An opening roof assembly according to any of claims 1 to 7, wherein the rear end of the front pivot lift arm (132) has a pivot formation (134, 136) which engages in a groove (26, 30) of the stationary guide means (22).

## Patentansprüche

1. Eine Schiebedachbaugruppe für ein Fahrzeug umfassend eine stationäre Führungseinrichtung (22), die an einer Seite einer Öffnung in einem fixierten Fahrzeugdach (10) vorgesehen ist und sich in der Längsrichtung des Fahrzeugs erstreckt, ein Schlitten (52), der gleitend in der stationären Führungseinrichtung (22) geführt ist und mittels einer Antriebseinrichtung verfahren werden kann, einen vorderen Schwenkhebearm (54, 132), der eine vordere Schwenkeinrichtung (80) an seinem vorderen Ende trägt und an den Schlitten (52) durch eine Höheneinstelleinrichtung (68, 72) gekoppelt ist, ein Paneel (12), das die Öffnung in dem fixierten Dach (10) in einer geschlossenen Position verschließt und das zuerst um die vordere Schwenkeinrichtung (80), die an seine vordere Kante angrenzt, aus seiner geschlossenen Position in eine Position geschwenkt werden kann, in der seine hintere Kante über das fixierte Fahrzeugdach (10) angehoben ist, und das dann verschieblich nach hinten in Positionen über dem fixierten Dach (10) bewegt werden kann, und ein Hebeglied (56), das sein oberes Ende schwenkbar mit dem Paneel (12) an einer Stelle (90) hinter der vorderen Schwenkeinrichtung (80) verbunden hat und dessen unteres Ende schwenkbar an einen Schlitz (70) in dem Schlitten (52) gekoppelt ist,
**dadurch gekennzeichnet,**
daß das untere Ende des Schwenkglieds (56) ein Hebegliedschwenkstift (86) trägt, der in die Schlitze (70) im Schlitten (52) eingreift, wobei eine Bewegung des Hebegliedschwenkstifts (86) im Schlitz (70) durch Kurvenoberflächen (88, 138) auf dem vorderen Schwenkhebearm (54, 132) gesteuert wird.

2. Eine Schiebedachbaugruppe gemäß Anspruch 1, in der der Hebegliedschwenkstift (86) direkt in den Schlitz (70) im Schlitten (52) eingreift.

3. Eine Schiebedachbaugruppe gemäß Anspruch 1 oder 2, in der der Schlitz (70) L-förmig mit einem im wesentlichen horizontalen Abschnitt und einem im wesentlichen vertikalen Abschnitt ist und die Kurvenoberflächen einen offenendigen Schlitz (88, 138) besitzen, der in entsprechenden spitzen Winkeln sowohl zu dem horizontalen Abschnitt als auch zu dem vertikalen Abschnitt des L-förmigen Schlitzes (70) geneigt ist, so daß eine Horizontalbewegung des Schlittens (52) relativ zu dem vorderen Schwenkhebearm (54, 132) während einer anfänglichen Bewegungsphase aus der geschlossenen Position eine Bewegung des Hebegliedschwenkstifts (86) weg von einem Ende des horizontalen Abschnitts des Schlitzes (70) bewirkt.

4. Eine Schiebedachbaugruppe gemäß Anspruch 1, 2 oder 3, bei der die Kurvenoberflächen eine Kante (126, 140) besitzen, die so angeordnet ist, daß der Hebegliedschwenkstift (86) während einer darauffolgenden Bewegungsphase an einem Ende des senkrechten Abschnitts des Schlitzes (70) zurückgehalten wird.

5. Eine Schiebedachbaugruppe gemäß einem der voranstehenden Ansprüche, bei der die Höheneinstelleinrichtung umfaßt einen vorderen Hebeschwenkstift (72), der an dem vorderen Schwenkhebearm (54, 132) befestigt ist und in einen geneigten Schlitz (68) im Schlitten (52) eingreift, so angeordnet, daß eine rückwärtige Bewegung des Schlittens (52) relativ zu dem vorderen Schwenkhebearm (54, 132) eine nach oben gerichtete Bewegung der vorderen Schwenkeinrichtung (80) bewirkt, einen Vorsprung (72) an dem vorderen Schwenkhebearm (54, 132), der in eine Kerbe (44, 46) in der stationären Führungseinrichtung (22) eingreift, um eine Horizontalbewegung des vorderen Schwenkhebearms (54, 132) zu begrenzen, wenn der vordere Hebeschwenkstift (72) von dem oberen Ende des geneigten Schlitzes (68) verschoben wird, und um eine nach unten gerichtete Bewegung der vorderen Schwenkeinrichtung (80) zu begrenzen, wenn der vordere Schwenkhebearm (54, 132) aus seiner vordersten Position in der stationären Führungseinrichtung (22) verschoben wird.

6. Eine Schiebedachbaugruppe gemäß Anspruch 5, bei der der Vorsprung an dem vorderen Schwenkhebearm (54, 132) ein Vorsprungende des vorderen Hebeschwenkstifts (72) umfaßt.

7. Eine Schiebedachbaugruppe gemäß Anspruch 5 oder 6, bei der ein Gleitbalken (100) verschieblich in der stationären Führungseinrichtung (22) angeordnet ist, so daß eine darauf angeordnete, nach oben ragende, rückwärts gerichtete Verriegelungsformation (104) in und aus Eingriff mit einer nach unten ragenden, vorwärts gerichteten Verriegelungsformation (106) beweglich ist, die angrenzend an das rückwärtige Ende des Paneels (12) sicher befestigt ist, und lösbare Kupplungseinrichtungen (96, 98) sind angeordnet, um den Gleitbalken (100) zur gleichzeitigen Bewegung mit dem Schlitten zu verbinden, wenn sich der vordere Hebeschwenkstift (72) entlang einem ersten Abschnitt (110) des geneigten Schlitzes (68) bewegt.

8. Eine Schiebedachbaugruppe gemäß einem der voranstehenden Ansprüche, bei der ein zweiter vorderer Hebeschwenkstift (76) im rückwärtigen Ende des Schlittens (52) in einen Schlitz (74) im rückwärtigen Ende des vorderen Schwenkhebearms (54) eingreift, wobei der Schlitten (74) dieselbe Gestalt und Dimensionen besitzt, wie der geneigte Schlitz (68) im Schlitten (52) und in Bezug dazu umgekehrt ist.

9. Eine Schlebedachbaugruppe gemäß einem der Anprüche 1 bis 7, bei der das hintere Ende des vorderen Schwenkhebearms (132) eine Drehzapfenformation (134, 136) besitzt, die in eine Nut (26, 30) der stationären Führungeinrichtung eingreift.

## Revendications

1. Ensemble de toit ouvrant pour un véhicule, comprenant un moyen de guidage (22) stationnaire, prévu sur un côté d'une ouverture ménagée dans un toit de véhicule (10) fixe et s'étendant dans la direction longitudinale du véhicule, un coulisseau (52) étant guidé coulissant dans le moyen de guidage (22) stationnaire et étant adapté pour être entraîné par un moyen d'entraînement, un bras de levage et de pivotement (54, 132) avant, supportant un moyen formant pivot avant (80) sur son extrémité avant et couplé au coulisseau (52) par un moyen de réglage de hauteur (68, 72), un panneau (12) fermant l'ouverture ménagée dans le toit fixe (10) dans une position fermée et pouvant être d'abord pivoté autour dudit moyen formant pivot avant (80), à proximité immédiate de son bord avant, depuis sa position fermée jusque dans une position dans laquelle son bord arrière est relevé au-dessus du toit de véhicule (10) fixe et pouvant ensuite être déplacé par coulissement vers l'arrière, pour venir dans des positions situées au-dessus du toit fixe (10), et une biellette de levage (56) ayant son extrémité supérieure reliée à pivotement au panneau (12), en un emplacement (90) situé derrière ledit moyen formant pivot avant (80) et son extrémité inférieure couplée à pivotement à une fente (70) ménagée dans le coulisseau (52), caractérisé en ce que l'extrémité inférieure de la biellette de levage (56) porte un ergot de pivotement de biellette de levage (86) qui s'engage dans ladite fente (70) ménagée dans le coulisseau (52), le déplacement de l'ergot de pivotement de biellette de levage (86) situé dans ladite fente (70) étant commandé par des surfaces de came (88, 138) situées sur le bras de levage et de pivotement avant (54, 132).

2. Ensemble de toit ouvrant selon la revendication 1, dans lequel l'ergot de pivotement de biellette de levage (86) s'engage directement dans ladite fente (70) ménagée dans coulisseau (52).

3. Ensemble de toit ouvrant selon la revendication 1 ou 2, dans lequel la fente (70) est en forme de L, ayant une partie sensiblement horizontale et une partie sensiblement verticale, et les surfaces de came comprennent une fente à extrémité ouverte (88, 138) inclinée, en formant des angles aigus respectifs, à la fois par rapport à la partie horizontale et à la partie verticale de la fente en forme de L (70), de manière qu'un déplacement horizontal du coulisseau (52) par rapport au bras de levage et de pivotement avant (54, 132) provoque un déplacement de l'ergot de pivotement de biellette de levage (86) l'éloignant d'une extrémité de la partie horizontale de la fente (70), durant une phase initiale de déplacement depuis la position fermée.

4. Ensemble de toit ouvrant selon la revendication 1, 2 ou 3, dans lequel les surfaces de came comprennent un bord (126, 140), agencé pour retenir l'ergot de pivotement de biellette de levage (86) au niveau d'une extrémité de la partie verticale de la fente (70), durant une phase ultérieure de déplacement.

5. Ensemble de toit ouvrant selon l'une quelconque des revendications précédentes, dans lequel le moyen de réglage de hauteur comprend un ergot de pivotement et de levage avant (72) fixé au bras de levage et de pivotement avant (54, 132) et s'engageant dans une fente (68) inclinée, ménagée dans le coulisseau (52), agencée de manière que le déplacement vers l'arrière du coulisseau (52) par rapport au bras de levage et de pivotement (54, 132) avant provoque un déplacement vers le haut du moyen formant pivot avant (80), une saillie (72) située sur le bras de levage et de pivotement (54, 132) avant s'engageant dans une fente (44, 46) ménagée dans le moyen de guidage (22) stationnaire, de manière à limiter le déplacement horizontal du bras de levage et de pivotement (54, 132) avant, lorsque l'ergot de pivotement et de levage (72) avant est déplacé depuis l'extrémité supérieure de la fente (68) inclinée et de manière à limiter le déplacement vers le bas du moyen formant pivot avant (80), lorsque le bras de levage et de pivotement (54, 132) avant est déplacé depuis sa position la plus avancée dans le moyen de guidage (22) stationnaire.

6. Ensemble de toit ouvrant selon la revendication 5, dans lequel ladite saillie, ménagée sur le bras de levage et de pivotement (54, 132) avant, comprend une extrémité saillante de l'ergot de pivotement et de levage (72) avant.

7. Ensemble de toit ouvrant selon la revendication 5 ou 6, dans lequel une barre coulissante (100) est placée coulissante dans le moyen de guidage (22) stationnaire, de manière qu'une structure de verrouillage (104), faisant saillie vers le haut et tournée vers l'arrière, formée sur ladite barre, puisse être déplacée pour venir en prise avec et s'écarter d'une structure de verrouillage (106), faisant saillie vers le bas et tournée vers l'avant, fixée à proximité immédiate du bord arrière du panneau (12), et des moyens d'accouplement (96, 98) libérables sont agencés pour connecter la barre coulissante (100) au coulisseau (52), en vue d'un déplacement simultané avec celui-ci, lorsque l'ergot de pivotement et de levage (72) avant se déplace le long d'une première section (110) de la fente (68) inclinée.

8. Ensemble de toit ouvrant selon l'une quelconque des revendications précédentes, dans lequel un deuxième ergot de pivotement et de levage (76) avant, situé dans l'extrémité arrière du coulisseau (52), s'engage dans une fente (74) ménagée dans l'extrémité arrière du bras de levage et de pivotement (54) avant, la fente (74) ayant les mêmes forme et dimensions que la fente (68) inclinée, ménagée dans le coulisseau (52), et disposée à l'envers par rapport à cette dernière.

9. Ensemble de toit ouvrant selon l'une quelconque des revendications 1 à 7, dans lequel l'extrémité arrière du bras de levage et de pivotement (132) avant présente une structure formant pivot (134, 136) qui s'engage dans une rainure (26, 30) du moyen de guidage (22) stationnaire.
